# EUROPEAN PATENT APPLICATION

(11) **EP 4 837 444 A1**
(43) Date of publication of application: **11.11.2026**
(21) Application number: 25174312.6
(22) Date of filing: 05.05.2025
(51) Int. Cl.: A42C 2/00, B29B 17/02

(54) **RECYCLING A PROTECTIVE HELMET**

(71) Applicant: Lazer Sport NV, 2800 Mechelen (BE)
(72) Inventor: Van Dam, Fé, 2800 Mechelen (BE); Van Asch, Bastiaan, 1853 Strombeek-Bever (BE)
(74) Representative: Ipsilon Belgium

(57) **Abstract**

Example embodiments relate to a method for recycling a helmet (100) for protecting a wearer's head; wherein the helmet comprises an energy absorbing inner layer (102, 212) that is bonded to an inner surface of a substantially rigid outer shell (101, 211); and wherein the energy absorbing inner layer is made of a closed-cell foam; the method comprising: breaking (202, 204) the bond between the energy absorbing inner layer and the rigid outer shell by shrinking (201) the energy absorbing inner layer (212, 222) relative to the rigid outer shell (211, 221).

## Description

### Field of the Invention

The present invention generally relates to recycling of a protective helmet, in particular to cleanly separating an energy absorbing inner layer from a substantially rigid outer shell bonded thereto.

### Background of the Invention

Helmets for protecting a wearer's head are well known and generally used in a variety of sports such as cycling, horse riding, climbing, skiing and other sports. Such a helmet generally comprises an energy absorbing inner layer configured to at least partly absorb a shock of an impact. Said energy absorbing layer can be relatively thick and may be made of a closed-cell foam, e.g. expanded polystyrene, EPS. The helmet may further comprise an outer shell at least partly covering said energy absorbing layer. Said outer shell may be relatively thin and lightweight, and is generally made of a substantially rigid material, e.g. polycarbonate, PC.

The energy absorbing inner layer and the outer rigid shell may be bonded to each other by glueing and/or press-fitting. Alternatively, the energy absorbing inner layer and the outer rigid shell may be directly bonded or fused seamlessly to each other through in-moulding, a manufacturing process where the outer shell and the inner layer are fused together in a single moulding process. In-moulding can create a lighter, more durable, and better-ventilated helmet compared to traditional bonding by glueing and/or press-fitting, where the shell and foam are bonded to form a two-part assembly. Helmets produced by in-moulding may be referred to as in-mould helmets.

When helmets come to an end of their useful lifetime, it can be desirable to recycle the helmet. To this end, the different materials of the helmet should be separated and sorted. This is a problem as the bond between the energy absorbing inner layer and the rigid outer shell makes it relatively difficult, time-consuming, and expensive to separate them. As a result, most bonded helmets are currently incinerated at the end of their useful lifetime, which is non-ecological and unsustainable. Moreover, even when succeeding in separating the inner layer and outer shell, e.g. mechanically, some material is typically transferred from one layer to the other. These problems are exacerbated for in-mould helmets as the material of the energy absorbing inner layer and outer rigid shell are fused to each other at the bonding interface. It is thus a challenge to separate these bonded layers of a protective helmet without remnants of the energy absorbing layer sticking to the rigid outer shell, or vice-versa. In other words, it is a challenge to efficiently obtain a clean detachment of the inner layer from the rigid shell of a bonded helmet without material transfer.

### Summary of the Invention

It is an object of the present invention, amongst others, to solve or alleviate the above identified problems and challenges by providing a method for recycling a protective helmet that allows separating an energy absorbing inner layer from a rigid outer shell bonded thereto, without substantial material transfer between these layers.

According to a first aspect, this object is achieved by a method for recycling a helmet for protecting a wearer's head; wherein the helmet comprises an energy absorbing inner layer that is bonded to an inner surface of a substantially rigid outer shell; and wherein the energy absorbing inner layer is made of a closed-cell foam; the method comprising: breaking the bond between the energy absorbing inner layer and the rigid outer shell by shrinking the energy absorbing inner layer relative to the rigid outer shell.

A helmet comprising an energy absorbing inner layer that is bonded to a rigid outer shell may be referred to as a bonded helmet. The bond between the energy absorbing inner layer and the rigid outer shell is configured to not come apart during regular use of the helmet, i.e. during the useful lifetime of the helmet. The bond may be achieved by in-moulding, glueing, or press-fitting the energy absorbing inner layer to the inner surface of the rigid outer shell. In-moulding refers to a manufacturing process where the outer shell and the inner layer are directly bonded or fused together seamlessly in a single moulding process to form a single unified structure. Helmets produced by in-moulding may also be referred to as in-mould helmets. In-mould helmets are free of adhesives, glue, and mechanical fastening elements for bonding the energy absorbing inner layer to the rigid outer shell. It will be apparent that in-mould helmets may still comprise adhesives, glue, or mechanical fastening elements for attaching auxiliary components to the single unified structure such as, for example, a retention system, padding, a fit adjustment system, a rotational impact system, reflective elements, or lights. Alternatively to in-moulding, the energy absorbing inner layer may also be bonded to the rigid outer shell by glueing, press-fitting, or a combination thereof. In these cases, the inner layer and rigid outer shell may form a two-part assembly. Helmets produced in this manner may be referred to as glued helmets, press-fitted helmets, or sometimes as hardshell helmets or hard shell bonded helmets. These helmets are free of mechanical fastening elements for bonding the energy absorbing inner layer to the rigid outer shell. It will be apparent that also these helmets may still comprise mechanical fastening elements for attaching auxiliary components to the two-part assembly. Helmets that comprise one or more mechanical fastening elements configured to reinforce a glued and/or press-fitted bond between the energy absorbing inner layer and rigid outer shell may also be suitable to be recycled by performing the disclosed method. However, for such helmets, the one or more mechanical fastening elements are preferably removed, or at least disengaged, before performing the disclosed method.

The energy absorbing inner layer is configured to at least partially absorb a shock of an impact. The energy absorbing inner layer is made of a closed-cell foam such as, for example, expanded polyurethane, EPS, expanded polyurethane, EPU, or expanded polypropylene, EPP. The rigid outer shell may be made of a substantially thin and rigid material such as, for example, polycarbonate, PC. The rigid outer shell at least partly covers the energy absorbing layer to which it is bonded.

The energy absorbing inner layer and the rigid outer shell thus have substantially different material properties. The disclosed method exploits this difference in material properties in an inventive way to easily break the bond between the energy absorbing inner layer and rigid outer shell without having to perform difficult, time-consuming, and expensive mechanical or chemical separation. This is achieved by exposing the helmet to conditions that shrink the energy absorbing inner layer relative to the substantially rigid outer shell. As the energy absorbing inner layer shrinks and contracts, a delamination stress develops at the bonding interface with the outer rigid shell. If the delamination stress exceeds the bonding force between the inner layer and rigid shell, a clean detachment of the energy absorbing inner layer from the inner surface of the rigid outer shell is achieved. A clean detachment refers to a separation of the energy absorbing inner layer from the rigid outer shell without substantial remnants of the inner layer material sticking to the rigid outer shell, or vice-versa. The method thus allows to efficiently obtain a clean detachment of the inner layer from the rigid outer shell without substantial material transfer. This allows to easily recycle bonded helmets by cleanly separating the material of the energy absorbing inner layer from the material of the rigid outer shell. These separated materials may then further be subjected to distinct recycling processes, as the closed-cell foam and rigid outer layer material demand specific handling and treatment due to differences in their composition and reusability.

It is an advantage that the process is straight-forward and time-efficient, which can substantially reduce the costs to recycle bonded helmets compared to mechanical or chemical separation of the layers. This has the further advantage that it can make bonded helmets more ecological and sustainable, as they can be recycled in an economically viable way as opposed to the current predominant practice of incinerating them. It is a further advantage that the energy absorbing inner layer has a reduced volume after detachment, which makes it easier and more efficient to transport and process it further.

According to an example embodiment, shrinking the energy absorbing inner layer may comprise softening the closed-cell foam.

As such, the closed-cell foam may become more pliable and compressible without melting, thereby preventing that it sticks to the outer rigid shell.

Alternatively or complementary, shrinking the energy absorbing inner layer may comprise at least partially degassing the closed-cell foam.

As such, the gas trapped within the cells of the closed-cell foam escapes from the closed-cell structure, reducing internal cell pressure, and causing the closed-cell foam to shrink and/or collapse.

According to an example embodiment, shrinking the energy absorbing inner layer may further comprise heating the helmet.

This can result in a cumulative effect of thermal degassing and thermal softening of the closed-cell foam, resulting in a more significant shrinkage of the energy absorbing inner layer and, thus, an effective separation of the energy absorbing layer and the rigid outer shell.

According to an example embodiment, the method may further comprise heating the helmet to a temperature that is at least equal to the softening temperature of the closed-cell foam and that is lower than the softening temperature of the substantially rigid outer shell.

In doing so, the energy absorbing inner layer may shrink due to thermal softening and/or thermal degassing without softening the rigid outer shell. This allows maintaining the overall shape and volume of the rigid outer shell while heating the helmet, i.e. at least the inner layer bonded to the outer shell.

According to an example embodiment, the method may further comprise heating the helmet to a temperature between around 90°C and around 150°C for at most around 25 minutes.

A lower temperature may not result in sufficient shrinking of the energy absorbing inner layer to result in detachment from the rigid outer shell, i.e. a lower temperature may not result in a delamination stress that exceeds the bonding force between the inner layer and rigid shell. A higher temperature may burn and/or melt the energy absorbing inner layer which can contaminate the outer rigid shell by leaving residue or sticking to it and, thus, does not result in a clean detachment as material is transferred between the layers. A higher temperature may also change the mechanical properties of the closed-cell foam, which is undesirable for recycling it. This temperature range can allow breaking the bond between an energy absorbing inner layer made of most common closed cell-foams, e.g. EPS, EPU, or EPP, and a substantially rigid outer shell made of most common materials, e.g. polycarbonate, PC, polyethylene terephthalate, PET, polyvinylchloride, PVC, acrylonitrile butadiene styrene, ABS, carbon fibre, glass fibre, or a combination thereof. The substantially rigid outer shell material may thus preferably have a softening temperature exceeding the softening temperature of the closed-cell foam. The relatively short heating duration of at most around 25 minutes has the advantage that it is less energy intensive and, thus, less costly and more eco-friendly. Alternatively, the helmet may be heated for more than 25 minutes.

According to an example embodiment, the method may further comprise heating the helmet to a temperature between around 110°C and around 130°C for at least around 15 minutes and at most around 25 minutes.

According to an example embodiment, the method may further comprise heating the helmet to a temperature of around 130°C for around 20 minutes.

This temperature range and heating duration may be particularly suitable for breaking the bond between an energy absorbing inner layer made of EPS and a substantially rigid outer shell made of PC.

According to an example embodiment, the method may further comprise heating the helmet by convection heating, direct air heating, steam heating, or radio-frequency heating.

According to an example embodiment, the method may further comprise pressurizing or de-pressurizing the helmet.

This can facilitate the collapse of the cell walls within the closed-cell foam of the energy absorbing inner layer. The helmet may be pressurized or de-pressurized in addition to heating the helmet simultaneously, thereby resulting in a cumulative effect of softening and degassing the closed-cell foam of the energy absorbing inner layer. Pressurizing or de-pressurizing the helmet in addition to heating the helmet may thus result in a more effective separation of the energy absorbing layer and the rigid outer shell. Alternatively, the helmet may be pressurized or de-pressurized without applying heat, thereby resulting only in degassing of the closed-cell foam of the energy absorbing inner layer.

According to an example embodiment, the method may comprise pressurizing the helmet to at least 80kPa.

The applied pressure may be upper bound by a pressure that affects the shape and/or volume of the substantially rigid outer shell, e.g. a pressure that starts to crush the rigid outer shell material.

According to an example embodiment, the method may further comprise removing auxiliary components from the helmet before shrinking the energy absorbing inner layer.

Auxiliary components can, for example, include a retention system, straps, buckles, padding, a fit adjustment system, rotational impact systems, reflective elements, a light, and sensors. These auxiliary components may thus be stripped from the helmet before exposing it to conditions that shrink the energy absorbing inner layer, e.g. before placing the helmet in an oven for heating it by convection or hot air.

The method may further comprise removing, or at least disengaging, one or more mechanical fastening elements configured to reinforce the bond between the energy absorbing inner layer and rigid outer shell by mechanically securing the energy absorbing inner layer to the inner surface of the substantially rigid outer shell in addition to a glued and/or press-fitted bond. Such mechanical fastening elements may, for example, be screws, clips, rivets, or fasteners. This allows recycling helmets comprising one or more mechanical fastening elements that act as a reinforcement to the glued and/or press-fitted bond between the inner layer and outer shell.

According to an example embodiment, wherein the energy absorbing inner layer may be bonded to an inner surface of the substantially rigid outer shell by in-moulding to form a single unified structure free of adhesive and mechanical fastening elements.

According to an example embodiment, the energy absorbing inner layer may be bonded to an inner surface of the substantially rigid outer shell by glueing and/or press-fitting to form a two-part assembly without mechanical fastening elements.

According to an example embodiment, the substantially rigid outer shell has a softening temperature exceeding the softening temperature of the closed-cell foam.

According to an example embodiment, the closed-cell foam may be expanded polystyrene, EPS, expanded polyurethane, EPU, or expanded polypropylene, EPP.

According to an example embodiment, the rigid outer shell may be made of polycarbonate, PC, polyethylene terephthalate, PET, polyvinylchloride, PVC, acrylonitrile butadiene styrene, ABS, carbon fibre, glass fibre, or a combination thereof.

### Brief Description of the Drawings

Fig. 1A shows a perspective side view of an example helmet that is suitable to be recycled by performing the method of the present disclosure;
Fig. 1B shows a perspective top view of the example helmet suitable to be recycled by performing the method of the present disclosure;
Fig. 1C shows a schematic cross-sectional side view along section A - A of the example helmet;
Fig. 2 shows example steps of the method for recycling a bonded helmet, according to embodiments; and
Fig. 3 shows steps of the method for recycling a helmet, according to further example embodiments.

### Detailed Description of Embodiment(s)

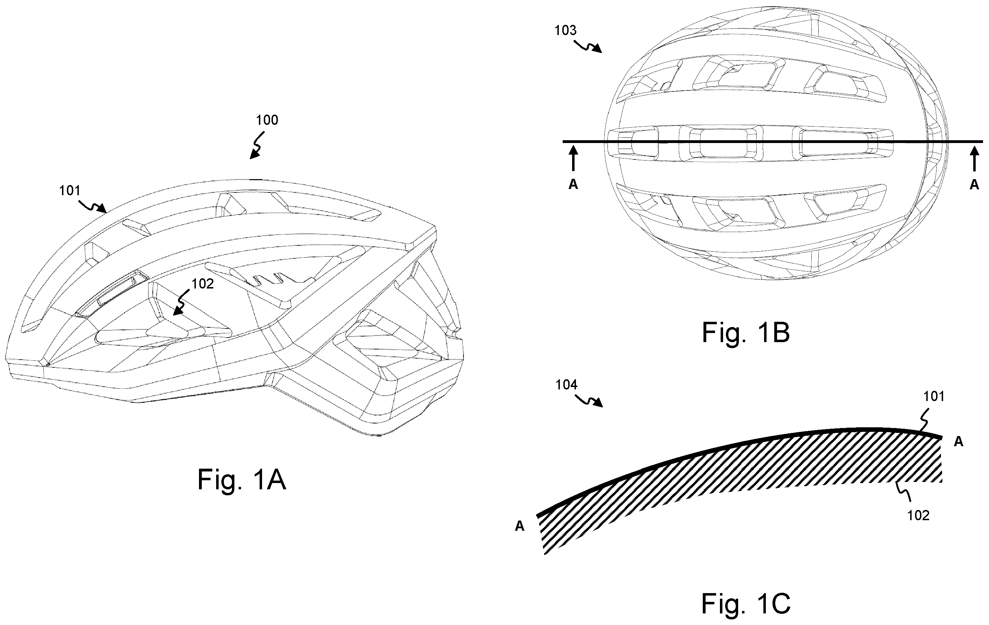

Fig. 1A shows a perspective side view of an example helmet 100 that is suitable to be recycled by performing the method of the present disclosure. The helmet 100 is configured to protect a wearer's head, in particular during sports activities such as, for example, during cycling, mountain-biking, or bicycle racing. It will be apparent that the disclosed method for recycling is not limited to helmets for cycling as shown in Fig. 1A, but that helmets for other sports may also be recycled by the disclosed method, e.g. helmets for horseback riding, climbing, skiing, skateboarding, BMX, or rollerblading.

Helmet 100 comprises an energy absorbing inner layer 102 configured to absorb energy at impact on the helmet 100, which may occur during a fall or an accident. The energy absorbing inner layer 102 is made of a closed-cell foam. This makes the energy absorbing inner layer 102 crushable and allows it to absorb energy at impact to protect a wearer's head. The closed-cell foam material may, for example, be expanded polystyrene, EPS, expanded polyurethane, EPU, or expanded polypropylene, EPP. The energy absorbing inner layer 102 may be relatively thick in a normal direction to its surface depending on the intended use of the helmet 100, i.e. depending on the potential force of impact on the helmet 100 during a fall or accident. For example, the energy absorbing inner layer 102 of a helmet for motor sports (not shown in Fig. 1A) may be thicker than the energy absorbing inner layer 102 of a helmet 100 for cycling.

Helmet 100 further comprises a substantially rigid outer shell 101 configured to at least partially engage and cover an outer surface of the energy absorbing inner layer 102. The rigid outer shell 101 is made of a substantially rigid material such as, for example, polycarbonate, PC, polyethylene terephthalate, PET, polyvinylchloride, PVC, acrylonitrile butadiene styrene, ABS, carbon fibre, glass fibre, or a combination thereof. The rigid outer shell 101 is generally thinner than the energy absorbing inner layer 102 to make a relatively light-weight helmet.

The energy absorbing inner layer 102 is bonded to an inner surface of the substantially rigid outer shell 101 in a substantially permanent and fixed way. The bond between the energy absorbing inner layer 102 and the rigid outer shell 101 is thus configured to not come apart during regular use of the helmet 100, i.e. during the useful lifetime of the helmet. A helmet comprising an energy absorbing inner layer 102 that is bonded to a rigid outer shell 101 may sometimes be referred to as a bonded helmet. The bond may be achieved by in-moulding, glueing, or press-fitting the energy absorbing inner layer 102 to the inner surface of the rigid outer shell 101.

In-moulding refers to a manufacturing process where the outer shell and the inner layer are directly bonded or fused together seamlessly in a single moulding process to form a single unified structure, rather than being made separately and bonded together later by, for example, an adhesive or glue. In-moulding can create a lighter, more durable, and better-ventilated helmet that is commonly perceived as more aesthetic because of the seamless connection between the energy absorbing inner layer 102 and rigid outer shell 101. Helmets produced by in-moulding are sometimes referred to as in-mould helmets. In-mould helmets are thus free of adhesives, glue, bonding agents, and mechanical fastening elements for bonding the energy absorbing inner layer 102 to the rigid outer shell 101. It will be apparent that in-mould helmets may still comprise adhesives, glue, bonding agents, or mechanical fastening elements for attaching auxiliary components (not shown in Fig. 1A) to the single unified structure, i.e. to the inner layer 102 and/or outer shell 102 that have been fused together. Such auxiliary components may, for example, be a retention system, a head basket, padding, a fit adjustment system, a rotational impact system, reflective elements, or lights.

Alternatively to in-moulding, the energy absorbing inner layer 102 may also be bonded to the rigid outer shell 101 by glueing, press-fitting, or a combination thereof. In these cases, the inner layer 102 and rigid outer shell 101 are made separately and bonded together later to form a two-part assembly. Helmets produced in this manner may be referred to as glued helmets, press-fitted helmets, or sometimes as hardshell helmets or hard shell bonded helmets. These helmets may be free of mechanical fastening elements for bonding the energy absorbing inner layer to the rigid outer shell. Mechanical fastening elements may, for example, be screws, clips, rivets, or fasteners. It will be apparent that also these types of helmets may still comprise mechanical fastening elements for attaching auxiliary components to the two-part assembly, i.e. to the inner layer 102 and/or outer shell 102 that have been bonded together. Helmets that comprise one or more mechanical fastening elements configured to reinforce a glued and/or press-fitted bond between the energy absorbing inner layer 102 and rigid outer shell 101 may also be suitable to be recycled by performing the disclosed method. In such helmets, the one or more mechanical fastening elements may act as a mechanical reinforcement to the glued and/or press-fitted bond. However, for such helmets, these mechanical fastening elements are preferably removed, or at least disengaged, before performing the recycling method of the present disclosure.

Fig. 1B shows a perspective top view 103 of the example helmet 100 suitable to be recycled by performing the method of the present disclosure. Fig. 1C shows a schematic cross-sectional side view 104 along section A - A of the example helmet 100. Fig. 1C illustrates that the energy absorbing inner layer 102 is bonded to an inner surface of the substantially rigid outer shell 101. It will be apparent that, even tough Fig. 1C shows a substantially uniform cross-section of the energy absorbing inner layer 102, it may have a more irregular cross-section, e.g. the energy absorbing inner layer 102 may be particularly shaped for absorbing rotational impacts as described in EP 3 590 375 B1.

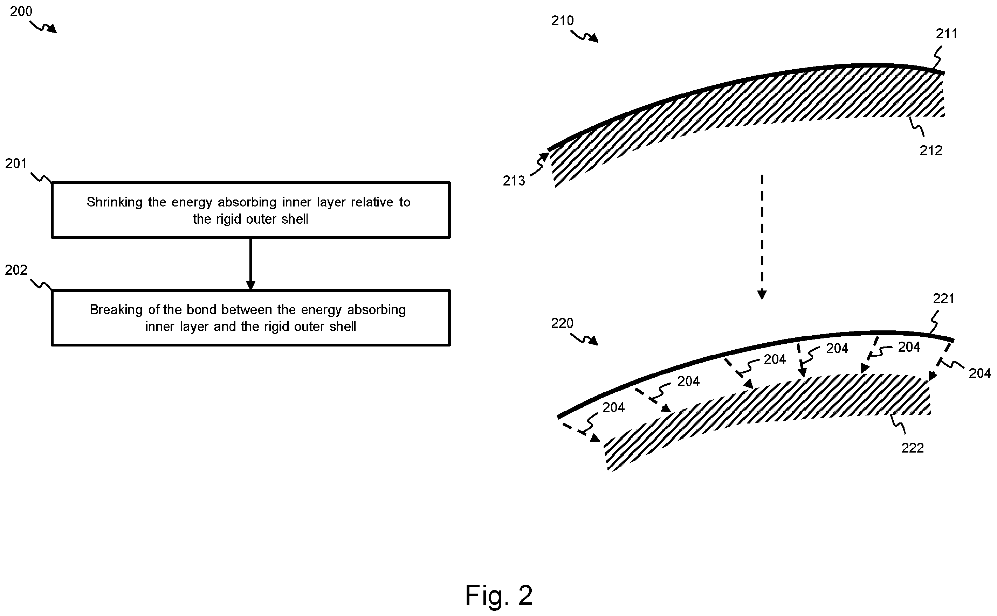

Fig. 2 shows example steps 200 of the method for recycling a bonded helmet, according to embodiments. Fig. 2 further shows a schematic cross-sectional side view of a bonded helmet before 210 initiating the recycling method 200 and after 220 completing the recycling method 200. The cross-sectional side view 210 is similar to Fig. 1C and shows an energy absorbing inner layer 212 bonded to a substantially rigid outer shell 211.

In a first step 201, the energy absorbing inner layer 212, 222 is shrunk relative to the rigid outer shell 211, 221. This can include shrinking the energy absorbing inner layer 212, 222 without substantially altering the overall shape and volume of the rigid outer shell 211, 221. In other words, inducing a volumetric reduction of the energy absorbing inner layer 212 while the rigid outer shell 211, 221 remains substantially dimensionally stable. Alternatively, shrinking the energy absorbing inner layer 212, 222 relative to the outer shell can include shrinking the energy absorbing inner layer 212, 222 at a higher rate than the rigid outer shell 211, 221; or shrinking the energy absorbing inner layer 212, 222 while the rigid outer shell 211, 221 undergoes limited expansion or limited changes in its shape. Shrinking the inner layer 212, 222 relative to the outer shell 211, 221 can be achieved by exposing the helmet to conditions that cause the energy absorbing inner layer 212, 222 to shrink but do not substantially affect the rigid outer shell 211, as the energy absorbing inner layer 222 and the rigid outer shell 211 have substantially different material properties, e.g. thermal response characteristics and pressure response characteristics. Conditions that cause the energy absorbing inner layer 212 to shrink may include heating the helmet, pressurizing the helmet, de-pressurizing the helmet, or a combination thereof. These conditions may cause a gradual shrinking of the energy absorbing inner layer, i.e. a relatively moderate shrinking rate. This may be preferred to avoid altering the overall shape and volume of the outer rigid shell 211, to avoid substantially altering the material properties of the energy absorbing inner layer 212, and to avoid material transfer between the layers 211, 212.

Common inner layer 222 closed-cell foam materials, such as EPS, may have a softening temperature or glass transition temperature that is substantially lower than the softening temperature and melting temperature of outer rigid shell 211 materials, such as polycarbonate. As such, heating the helmet at a temperature above the inner layer's 222 softening temperature but below the softening temperature and melting temperature of the outer rigid shell 211 can result in contraction and shrinking of the energy absorbing layer 211 without substantially altering the rigid outer shell 211.

The contraction and shrinking of the energy absorbing layer 211 may be the cumulative result of gradual softening and at least partially degassing of the closed-cell foam. Most closed-cell foams comprise a rigid polystyrene structure with numerous closed cells filled with air or residual blowing agents such as pentane. As the closed-cell foam is heated above its softening temperature or glass transition temperature, the polystyrene matrix softens, resulting in a loss of mechanical rigidity. Concurrently, the trapped gas within the foam cells expand due to the increase in temperature and begin to diffuse through the increasingly permeable polymer walls. This degassing process leads to a rupture of the foam's cellular structure, as the internal pressure exceeds the softened matrix's ability to contain it. Once the gas escapes, the structural integrity of the foam is compromised, causing the expanded material to collapse. This results in a volumetric reduction, i.e. shrinking, of the closed-cell foam.

As the energy absorbing inner layer 211 gradually shrinks and contracts, a delamination stress develops at the bonding interface 213 with the outer rigid shell 211. If the delamination stress exceeds the bonding force between the layers 211, 212, the bond breaks in step 202 and a clean detachment 204 of the energy absorbing inner layer 222 from the inner surface of the rigid outer shell 221 is achieved. A clean detachment refers to a separation 204 of the energy absorbing inner layer 222 from the rigid outer shell 221 without substantial remnants of the inner layer material sticking to the rigid outer shell, or vice-versa. The method thus comprises shrinking the energy absorbing inner layer 211 relative to the outer rigid shell, thereby inducing a detachment or delamination stress at the bounding interface between them that ultimately leads to breaking of the bond.

The method thus exploits differences in the material properties of the energy absorbing inner layer 212 and the rigid outer shell 211 in an inventive way to easily break the bond between the energy absorbing inner layer and the rigid outer shell without performing difficult, time-consuming, and expensive mechanical or chemical separation. The method allows to efficiently obtain a clean detachment 204 of the inner layer 222 from the rigid outer shell 221 without substantial material transfer. This allows to easily recycle bonded helmets by cleanly separating the material of the energy absorbing inner layer 222 from the rigid outer shell 221. These separated materials 221, 222 may then further be subjected to distinct recycling processes, as the closed-cell foam and rigid outer layer material demand specific handling and treatment due to differences in their composition and reusability.

It is an advantage that the process is straight-forward and time-efficient, which can substantially reduce the costs to recycle bonded helmets compared to mechanical or chemical separation of the layers. This has the further advantage that it can make bonded helmets more ecological and sustainable, as they can be recycled in an economically viable way as opposed to the current predominant practice of incinerating them. It is a further advantage that the energy absorbing inner layer 222 has a reduced volume after detachment 204, which makes it easier and more efficient to transport and process it further.

It will be apparent that the breaking of the bond may or may not occur simultaneously along the length of the bonding interface between the inner layer 222 and the outer shell 221. For example, the energy absorbing inner layer 222 may first start detaching at the front of the helmet while exposed to conditions that cause the inner layer to shrink, followed by detachment at a central portion of the helmet, and end with detachment at the back of the helmet. It will further be apparent that a glued bond may be broken in a glued helmet, a press-fitted bond may be broken in a press-fitted helmet, and a direct bond may be broken in an in-mould helmet.

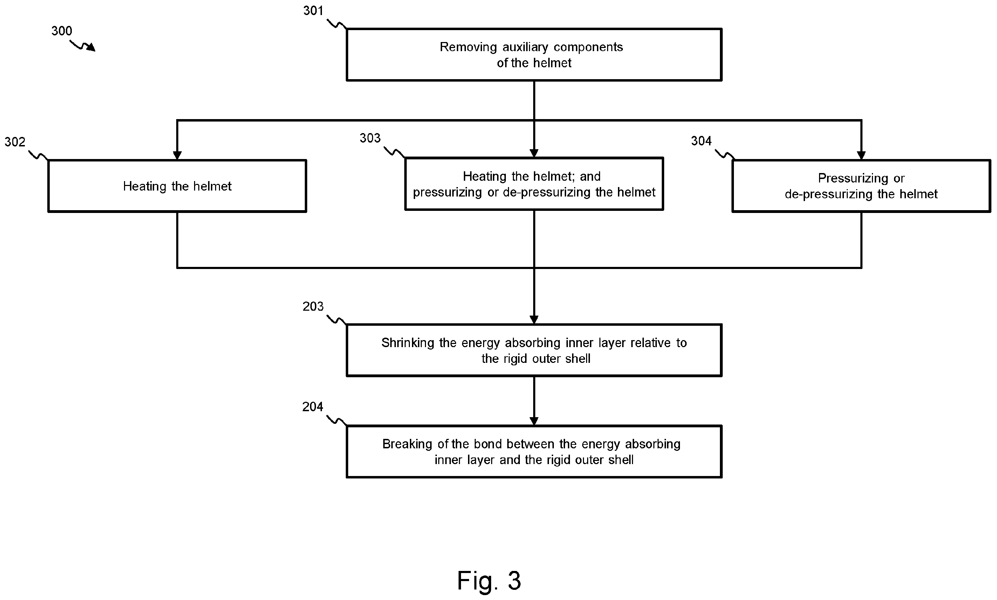

Fig. 3 shows steps 300 of the method for recycling a helmet, according to further example embodiments. In a first step 301, auxiliary components may be removed from the helmet before exposing the helmet to conditions 302, 303, 304 that cause the energy absorbing inner layer 212 to shrink. Auxiliary components can, for example, include a retention system, a head basket, straps, buckles, padding, a fit adjustment system, rotational impact systems, reflective elements, a light, and sensors.

Optionally, the method may further comprise in step 301 removing, or at least disengaging, one or more mechanical fastening elements configured to reinforce the bond between the energy absorbing inner layer and rigid outer shell. In other words, for a helmet that comprises one or more mechanical fastening elements that act as a mechanical reinforcement to the glued and/or press-fitted bond, the mechanical fastening elements may preferably be removed, or at least disengaged, before exposing the helmet to conditions 302, 303, 304 that cause the energy absorbing inner layer to shrink.

Exposing the helmet to conditions that cause the energy absorbing inner layer to shrink may include heating the helmet in step 302, pressurizing the helmet in step 304, de-pressurizing the helmet in step 304, or a combination of heating the helmet and simultaneously pressurizing/de-pressurizing it in step 303. The helmet may thus be pressurized or de-pressurized in addition to heating the helmet simultaneously, thereby resulting in a cumulative effect of softening and degassing of the energy absorbing inner layer's closed-cell foam. This may thus result in a more effective separation of the energy absorbing layer and the rigid outer shell as the collapse of the cell walls is facilitated more than when only applying heat or only applying pressure/vacuum.

The helmet may be heated to a temperature between around 90°C and around 150°C. A lower temperature may not result in sufficient shrinking of the energy absorbing inner layer to result in detachment from the rigid outer shell, i.e. a lower temperature may not result in a delamination stress that exceeds the bonding force between the inner layer and rigid shell. A higher temperature may burn and/or melt the energy absorbing inner layer which can contaminate the outer rigid shell by leaving residue or sticking to it and, thus, does not result in a clean detachment as material is transferred between the layers. A higher temperature may also change the mechanical properties of the closed-cell foam, which is undesirable for recycling it. Heating the helmet within this temperature range can allow breaking the bond between an energy absorbing inner layer made of most common closed cell-foams, e.g. EPS, EPU, or EPP, and a substantially rigid outer shell made of most common rigid shell materials, e.g. polycarbonate, PC, polyethylene terephthalate, PET, polyvinylchloride, PVC, acrylonitrile butadiene styrene, ABS, carbon fibre, glass fibre, or a combination thereof. The substantially rigid outer shell material may preferably have a softening temperature exceeding the softening temperature of the closed-cell foam. Advantageously, the helmet may be heated to a temperature between around 90°C and around 150°C for at most around 25 minutes. Such a relatively short heating duration of at most around 25 minutes has the advantage that it is less energy intensive and, thus, less costly and more eco-friendly. Preferably, the helmet may be heated to a temperature between around 110°C and around 130°C for at least around 15 minutes and at most around 25 minutes. More preferably, the helmet may be heated to a temperature of around 130°C for around 20 minutes. This temperature range and heating duration may be particularly suitable for breaking the bond between an energy absorbing inner layer made of EPS and a substantially rigid outer shell made of PC.

Heating the helmet can be achieved by convection heating, direct air heating, steam heating, radio-frequency heating, or any other suitable form of heating. Convection heating involves the transfer of heat through the movement of a fluid, typically air or gas, around the helmet. This can be achieved by placing the helmet in, for example, a convection oven, drying tunnel, or hot air circulating furnace, where heated air is forced over the object to ensure uniform temperature distribution. Direct air heating operates similarly, but with heated air blown directly onto the helmet using impingement ovens, infrared-air hybrid systems, or forced-air heaters. In steam heating, thermal energy is delivered through condensation of steam. This can for example be achieved by placing the helmet within a jacketed vessel, steam autoclave, or heat exchanger system. As the steam condenses on or near the helmet's surface, it releases latent heat, providing highly efficient and uniform heating. Radio-frequency, RF, heating, relies on dielectric heating. To this end, the helmet may be placed within a high-frequency electromagnetic field generated by RF generators or dielectric dryers. These systems induce oscillations in polar molecules within the closed cell-foam inner layer of the helmet, creating internal friction and generating heat volumetrically. Unlike surface-based heating methods, RF heating enables deep, uniform energy absorption, which can make it particularly effective for uniformly heating the closed-cell foam of the energy absorbing inner layer and, thus, shrinking it.

Pressurizing the helmet may refer to increasing the ambient pressure surrounding the helmet or increasing the internal pressure of the helmet. This can, for example, be achieved by placing the helmet within a pressure vessel or an autoclave. According to an example embodiment, the helmet may preferably be pressurized to at least 80kPa. A higher pressure may be applied as long as it does not affect the shape and/or volume of the rigid outer shell. In other words, the upper limit of the applied pressure may be defined by the pressure response characteristics of the rigid outer shell material.

De-pressurizing the helmet may refer to decreasing the ambient pressure surrounding the helmet or decreasing the internal pressure of the helmet to create vacuum conditions. This can, for example, be achieved by means of a vacuum chamber, vacuum oven, or vacuum pump.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A method for recycling a helmet (100) for protecting a wearer's head; wherein the helmet comprises an energy absorbing inner layer (102, 212) that is bonded to an inner surface of a substantially rigid outer shell (101, 211); and wherein the energy absorbing inner layer is made of a closed-cell foam; the method comprising:
- breaking (202, 204) the bond between the energy absorbing inner layer and the rigid outer shell by shrinking (201) the energy absorbing inner layer (212, 222) relative to the rigid outer shell (211, 221).

2. The method according to claim 1, wherein shrinking the energy absorbing inner layer comprises softening the closed-cell foam.

3. The method according to any of the preceding claims, wherein shrinking the energy absorbing inner layer comprises at least partially degassing the closed-cell foam.

4. The method according to any of the preceding claims, wherein shrinking the energy absorbing inner layer further comprises heating the helmet.

5. The method according to claim 4, further comprising heating the helmet to a temperature that is at least equal to the softening temperature of the closed-cell foam and that is lower than the softening temperature of the substantially rigid outer shell.

6. The method according to claim 4 or 5, further comprising heating the helmet to a temperature between around 90°C and around 150°C for at most around 25 minutes.

7. The method according to claim 6, further comprising heating the helmet to a temperature of around 130°C for around 20 minutes.

8. The method according to any of claims 4 - 7, further comprising heating the helmet by convection heating, direct air heating, steam heating, or radio-frequency heating.

9. The method according to any of claims 3 - 8, further comprising pressurizing or de-pressurizing the helmet.

10. The method according to claim 9, further comprising pressurizing the helmet to at least 80kPa.

11. The method according to any of the preceding claims, further comprising removing auxiliary components from the helmet before shrinking the energy absorbing inner layer.

12. The method according to any of the preceding claims, wherein the energy absorbing inner layer is bonded to an inner surface of the substantially rigid outer shell by in-moulding to form a single unified structure free of adhesive and mechanical fastening elements.

13. The method according to any of claims 1 - 11, wherein the energy absorbing inner layer is bonded to an inner surface of the substantially rigid outer shell by glueing and/or press-fitting to form a two-part assembly without mechanical fastening elements.

14. The method according to any of the preceding claims, wherein the closed-cell foam is expanded polystyrene, EPS, expanded polyurethane, EPU, or expanded polypropylene, EPP.

15. The method according to any of the preceding claims, wherein the rigid outer shell is made of polycarbonate, PC, polyethylene terephthalate, PET, polyvinylchloride, PVC, acrylonitrile butadiene styrene, ABS, carbon fibre, glass fibre, or a combination thereof.
